Europäisches Patentamt

European Patent Office

Office européen des brevets

(19)

(11) Numéro de publication : **0 083 882**
**B1**

(12) # FASCICULE DE BREVET EUROPÉEN

(45) Date de publication du fascicule du brevet :
26.03.86

(51) Int. Cl.⁴ : **G 01 D 13/06, H 01 H 35/26**

(21) Numéro de dépôt : **82402278.4**

(22) Date de dépôt : **14.12.82**

(54) Dispositif indicateur de pression de consigne pour un manostat.

(30) Priorité : **15.12.81 FR 8123381**

(43) Date de publication de la demande :
**20.07.83 Bulletin 83/29**

(45) Mention de la délivrance du brevet :
**26.03.86 Bulletin 86/13**

(84) Etats contractants désignés :
**DE GB**

(56) Documents cités :
**DE-A- 2 208 678**
**FR-A- 2 193 245**
**FR-A- 2 333 223**
**FR-A- 2 380 590**
**US-A- 3 543 604**

(73) Titulaire : **LA TELEMECANIQUE ELECTRIQUE**
**33 bis, avenue du Maréchal Joffre**
**F-92000 Nanterre (FR)**

(72) Inventeur : **Maurin, Jacques**
**28, rue de la Commanderie Château Bernard**
**F-16100 Cognac (FR)**

(74) Mandataire : **Marquer, Francis**
**CABINET MOUTARD 35, avenue Victor Hugo Rési-**
**dence Champfleury**
**F-78180 Voisins-le-Bretonneux (FR)**

## Description

L'invention concerne un dispositif indicateur de pression pour un manostat comportant dans un boîtier ayant une face arrière et, à l'opposé de celle-ci, une face avant constituée par un couvercle amovible, un dispositif sensible à une pression de fluide dans lequel celle-ci provoque le déplacement d'un organe mobile de commande, un ressort de compression ayant une première extrémité qui communique un effort à cet organe pour équilibrer la pression et une seconde extrémité coopérant avec un dispositif de réglage apte à modifier la compression de ce ressort, un interrupteur électrique ayant un poussoir et des bornes de raccordement internes pour recevoir des extrémités de conducteurs électriques, un levier de transmission qui communique les déplacements de l'organe mobile à ce poussoir, un organe indicateur qui est lié aux déplacements de la seconde extrémité du ressort ou au dispositif de réglage et comporte un index se déplaçant en regard d'une échelle de pression, ce boîtier présentant sur sa surface, un orifice de pression relié intérieurement au dispositif sensible et extérieurement à une source de pression de fluide à surveiller et une ouverture de raccordement à travers laquelle passent les conducteurs électriques.

Un tel appareil est destiné à effectuer par exemple la mise en route et l'arrêt d'un groupe compresseur dont le moteur est contrôlé par l'interrupteur et dont le réservoir d'air est relié au dispositif sensible afin de maintenir la pression de ce réservoir à un niveau déterminé.

Par le brevet US-A-3 543 223, on connaît déjà des dispositifs indicateurs de pression pour des manostats présentant la constitution générale mentionnée ci-dessus, dans lesquels les dispositions respectives des éléments qui les constituent ne permettent ni un montage aisé en usine, ni une utilisation rationnelle du volume interne de l'appareil, en raison même de l'encombrement des dispositifs indicateurs connus.

Par ailleurs, le brevet FR-A-2 333 223 décrit un indicateur asservi à affichage linéaire logé à l'intérieur d'un boîtier et dans lequel une bande indicatrice souple circule devant une plage repère, parallèlement à la face avant du boîtier et dans un canal glissière comprenant au moins une partie transparente. Toutefois, ce brevet ne résout, en aucune façon, le problème relatif au montage d'un tel dispositif d'affichage sur un couvercle amovible du boîtier.

L'invention a donc pour but de résoudre ces problèmes. Elle propose, à cet effet, un dispositif indicateur de pression pour un manostat présentant la constitution générale connue précédemment mentionnée, ce dispositif étant caractérisé en ce que le ressort associé au dispositif sensible à la pression est axé perpendiculairement à la face avant du couvercle, en ce que l'organe indicateur comporte un ruban flexible accouplé à une pièce mobile qui suit la seconde extrémité du ressort, et en ce que le couvercle comprend un couloir dans lequel vient circuler le ruban, ce couloir présentant une première portion qui s'étend à l'intérieur du boîtier parallèlement à l'axe de déplacement de ladite pièce mobile, une deuxième portion de forme courbe et une troisième portion transparente, parallèle à ladite face avant du couvercle amovible.

D'autres mesures complémentaires, ainsi qu'un mode de réalisation préféré mais non limitatif apparaîtront mieux à la lecture de la description ci-dessous et à l'examen des figures parmi lesquelles :

la figure 1 représente une vue schématique en perspective du manostat,

la figure 2 montre schématiquement une vue de côté en coupe par le plan PP' de la figure 1, dans laquelle on aperçoit les principaux éléments,

la figure 3 représente schématiquement une vue de face du manostat,

la figure 4 illustre un mode de réalisation avantageux du manostat dans une vue de côté en coupe correspondant à celle de la figure 2,

la figure 5 représente une vue avant en coupe partielle par le plan AA' d'une rondelle de l'organe de réglage,

la figure 6 représente une vue avant d'un écrou de l'organe de réglage,

la figure 7 illustre une vue avant de l'appareil, couvercle monté,

la figure 8 montre en coupe partielle une vue de côté de l'appareil au cours du démontage ou du remontage du couvercle, et

les figures 9 et 10 représentent deux variantes de réalisation du levier de transmission et de l'interrupteur.

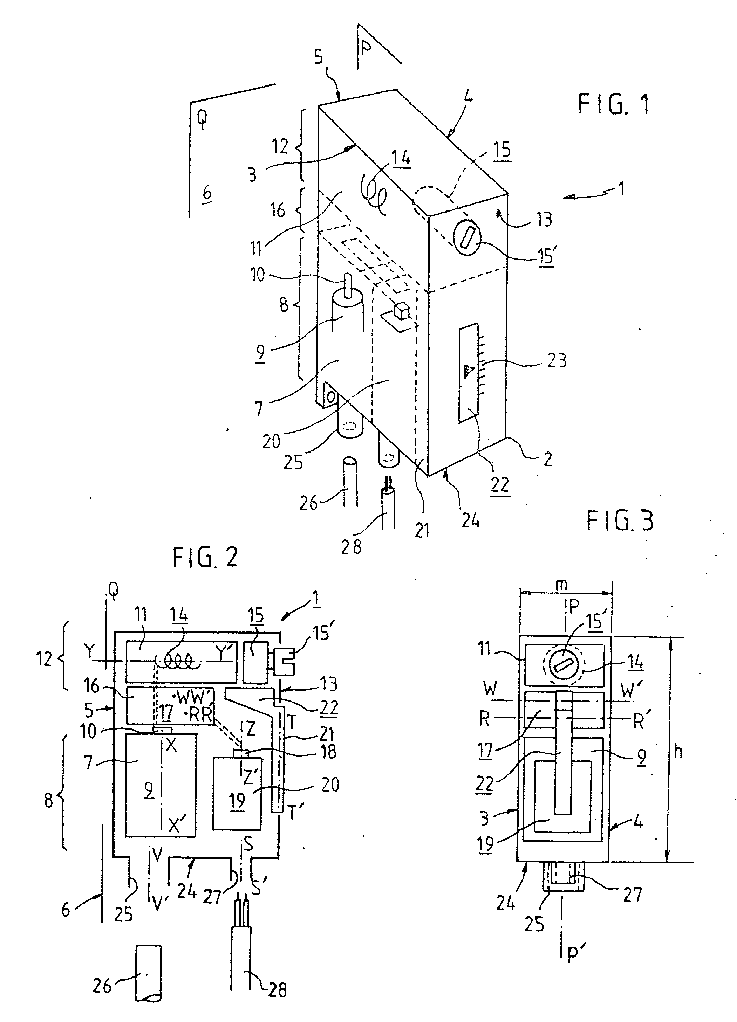

Le manostat 1 visible à la figure 1 a été décomposé en un certain nombre de volumes élémentaires recevant chacun l'un des éléments ou groupes d'éléments nécessaires à l'exécution de sa fonction, et est représenté dans une position correspondant à celle qui sera recommandée en raison de la direction selon laquelle seront raccordés ultérieurement une canalisation de fluide sous pression et un câble électrique de liaison. Le manostat 1 comporte un boîtier prismatique 2, voir également les figures 2 et 3, dont la largeur m, mesurée entre deux faces latérales parallèles verticales 3, 4, est sensiblement inférieure à la hauteur h mesurée verticalement. Une face arrière 5, rectangulaire comme une face avant 13 qui lui est opposée, sert à la fixation du boîtier sur un châssis ou un support 6 ayant un plan vertical Q qui contient cette face 5, voir figures 1 et 2.

Dans un premier volume 7 situé au voisinage de la face arrière 5 et se trouvant dans une région inférieure 8 du boîtier, est placé un dispositif 9 sensible à la pression dans lequel cette dernière provoque le déplacement d'un organe mobile de commande 10 ; dans un deuxième volume 11 situé dans une région supérieure 12 du boîtier, qui s'étend de la face de fixation 5 jusqu'à la face avant 13, sont placés un ressort de compression 14 et un dispositif de réglage 15, 15' accessible sur la face avant ; dans un troisième volume intermédiaire 16, placé entre les deux volumes précédents, est disposé un levier de transmission 17 qui communique les mouvements et la position de l'organe de commande 10 au poussoir 18 d'un interrupteur 19 se trouvant lui-même dans un quatrième volume 20 placé entre le premier volume 7 et la face avant 13, enfin, un cinquième volume 21 placé entre les deuxième, troisième et quatrième volumes d'une part, et la face avant 13 d'autre part, reçoit un organe indicateur 22 dont l'index coopère avec une échelle 23 visible du côté de la face avant, voir figure 3. Le cinquième volume 21 s'étend jusqu'au deuxième volume 11, en raison des liaisons qui seront établies entre l'organe indicateur et, soit la seconde extrémité du ressort, soit une pièce du dispositif de réglage, ainsi que cela apparaîtra ultérieurement.

Sur une face inférieure 24 du boîtier 1 sont enfin placés un orifice de raccordement pneumatique 25, accessible de bas en haut, qui est placé au voisinage de la face de fixation 5 et doit recevoir une extrémité de canalisation 26 pour conduire une pression extérieure au dispositif sensible 9, ainsi qu'une ouverture de passage 27 à travers laquelle passera un câble ou des conducteurs électriques 28' devant être raccordés à des bornes de l'interrupteur ; l'orifice 25 est, de plus, placé plus près du plan Q et de la face de fixation 5, que ne l'est l'ouverture 27 qui est, elle, plus proche de la face avant 13.

Si l'on se reporte à la figure 2, on constate que l'organe de commande 10 se déplace le long d'un axe XX', que le ressort de compression 14, qui est constitué par un ressort hélicoïdal, possède un axe de symétrie YY', que le poussoir 18 se déplace le long d'un axe ZZ', que l'index de l'organe indicateur 22 se déplace le long d'un axe TT', que l'orifice 25 possède un axe VV' et que l'ouverture 27 possède un axe SS'.

L'axe YY' est sensiblement perpendiculaire au plan Q, à la face de fixation 5 et à la face avant 13, et les axes XX', TT', VV' et SS' sont sensiblement parallèles entre eux et à la face avant, voir figure 2 ; par ailleurs, tous ces axes sont sensiblement contenus dans un plan médian PP', qui passe à égale distance des faces latérales parallèles 3 et 4 et qui est perpendiculaire au plan Q, voir figure 3.

Un levier de transmission 17, contenu dans le troisième volume 16, oscille par exemple autour d'un axe RR' qui est sensiblement perpendiculaire au plan médian P.

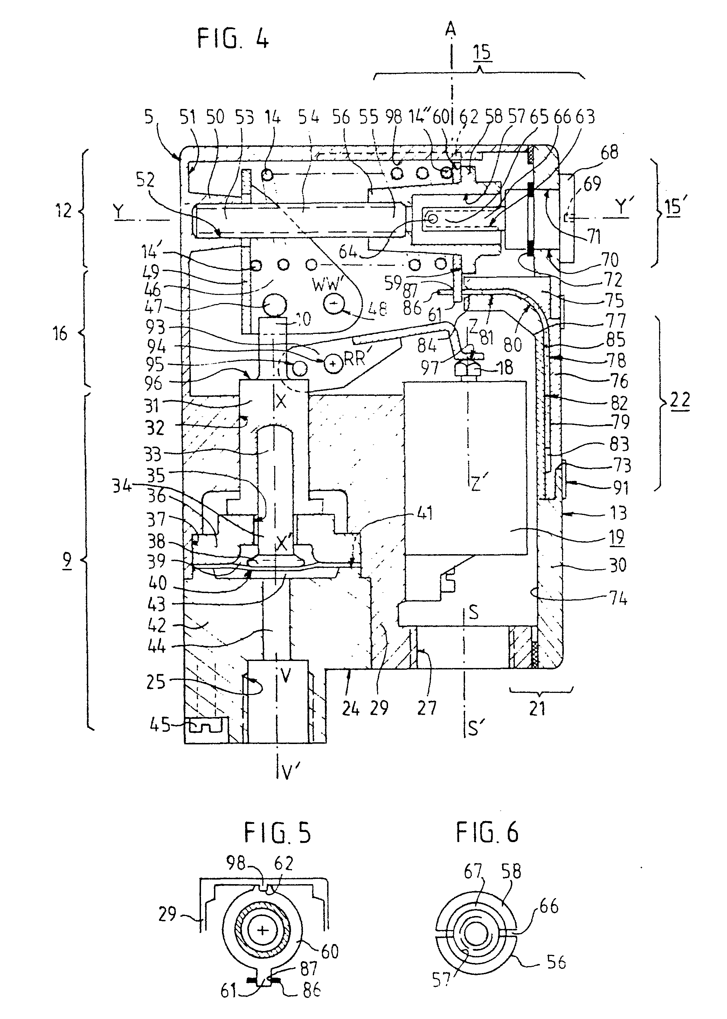

Dans un mode de réalisation avantageux visible à la figure 4, les éléments ayant les mêmes fonctions que précédemment seront définis par les mêmes repères.

Le boîtier 2 comporte un corps creux 29 qui présente un espace intérieur fermé par un couvercle 30 sensiblement plan, placé à l'avant du boîtier pour en constituer la face avant 13 opposée à la face de fixation 5.

Le dispositif 9 sensible à la pression comporte un organe de commande constitué par une extrémité 10 d'une tige cylindrique 31 coulissant le long de l'axe XX' dans un alésage 32 du corps. Cette tige est associée à un poussoir 33 concentrique, dont une portion 34 traverse une ouverture 35 d'un siège annulaire 36 qui est placé dans un deuxième alésage 37 du corps concentrique au premier ; une extrémité du poussoir, opposée à l'organe de commande 10, présente une tête 38 de révolution qui est placée dans une première chambre 39 du siège annulaire ; cette chambre est fermée par une membrane souple 40 dont la périphérie est appliquée sur le siège par une surface annulaire 41 d'un bouchon 42 présentant une seconde chambre 43 opposée à la première et reliée par un canal 44 à l'orifice de raccordement pneumatique 25 dont l'axe est VV'. Ce bouchon 42 est fixé sur le corps 29, par exemple à l'aide de vis telles que 45.

Lorsqu'une pression P est présente à l'orifice 25, une force, dirigée vers le haut de la figure, est appliquée à la tête 38 par la membrane, et tend à soulever l'organe de commande 10.

Le mouvement de cet organe de commande 10 est communiqué à une pièce d'appui 47 appartenant à un premier levier 46, qui est pivoté autour d'une goupille cylindrique 48 d'axe WW', perpendiculaire au plan de la figure qui est le plan médian PP' ; ce levier comporte par ailleurs, une patte 49 sensiblement parallèle à l'axe WW', qui est, dans la position de repos représentée à cette figure, appuyée sur un bossage 50 faisant partie du fond 51 du corps opposé à la face de fixation arrière 5.

Ce bossage comporte un trou fileté 52 dans lequel est vissée et bloquée une première extrémité 53 d'une tige filetée 54 dont l'axe YY' est perpendiculaire aux faces arrière 5 et avant 13.

Sur l'extrémité 55 de cette tige filetée opposée à la première, est engagé un taraudage appartenant à un écrou 56 qui présente par ailleurs, un logement cylindrique 57 opposé à la tige et un épaulement extérieur 58. Cet écrou constitue une pièce de réglage qui sera déplacée par un organe de réglage repéré par 15' aux figures 2 et 3 et décrit plus loin.

Contre une face 59 de cet épaulement, dirigée vers l'extrémité 53, est placée une rondelle 60 qui comporte un prolongement radial 61 et une encoche 62 diamètralement opposée, voir en particulier la figure 5. Cette encoche coopère avec une nervure interne 98 du corps qui est parallèle à YY'. Un ressort hélicoïdal 14 est placé concentriquement à YY' autour de la tige filetée et de façon telle qu'une première extrémité 14' s'appuie sur la patte 49 et qu'une seconde extrémité 14" s'appuie sur la rondelle 60.

La compression de ce ressort, qui est communiquée par l'intermédiaire du premier levier 46 à l'organe de commande 10 peut, par suite, équilibrer une force communiquée à ce dernier par la pression de fluide.

Cette compression du ressort peut être ajustée en communiquant à l'écrou 56 une rotation dans un sens ou dans l'autre ; au cours de cette rotation, la rondelle 60 se déplace parallèlement à l'axe YY' et sans tourner sur elle-même. La rotation de cet écrou est obtenue grâce à la présence sur celui-ci, de surfaces 63 parallèles à l'axe YY', sur lesquelles s'appuient des extrémités opposées d'une goupille 64 placée diamétralement dans une extrémité 65 d'un organe de réglage 15 qui pénètre dans le logement 57. Ces surfaces 63 peuvent par exemple être portées par une entaille 66 qui traverse la paroi 67 de l'écrou entourant le logement 57, l'extrémité 65 se trouvant alors placée coaxialement dans le logement, voir aussi figure 6.

L'organe de réglage 15' possède une tête externe 68 pourvue par exemple d'une fente de tournevis 69 qui facilitera sa manœuvre, et une surface cylindrique 70 qui est pivotée dans un palier 71 du couvercle 30. Des moyens de retenue, tels qu'un circlips 72, rendent l'organe de réglage solidaire du couvercle. L'écrou 56 et l'organe de réglage constituent ensemble le dispositif de réglage 15, 15'.

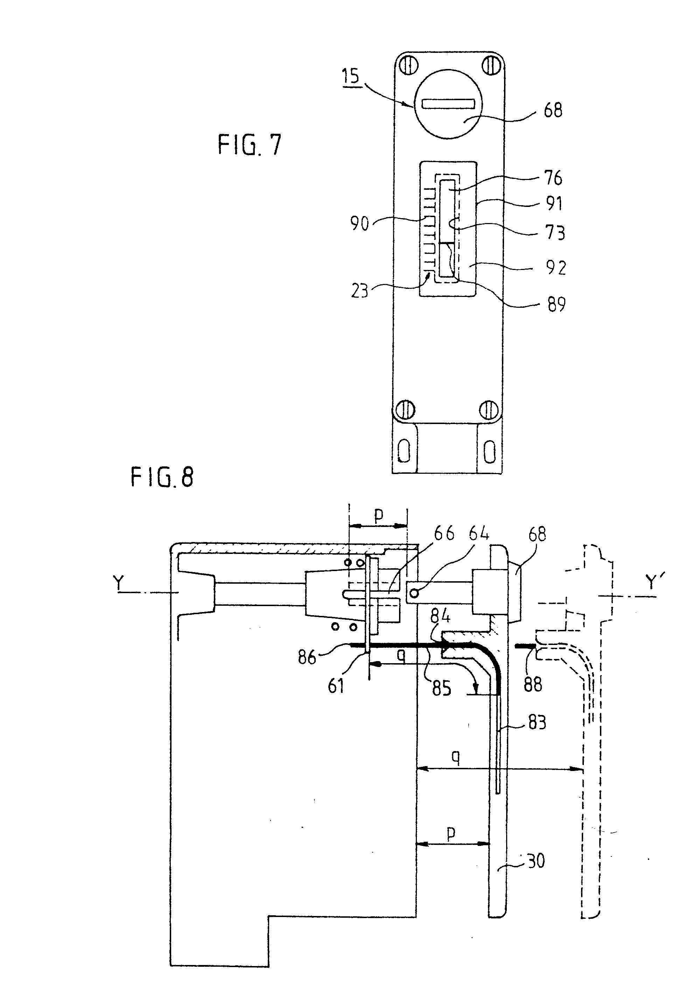

Le couvercle présente par ailleurs une fenêtre verticale 73, voir aussi figure 7, et reçoit sur sa face interne 74 des éléments appartenant à un organe indicateur de pression 22, à savoir :
— une première pièce de guidage 75 ayant une portion transparente 76 externe qui remplit cette fenêtre et une première surface d'appui 82 interne,
— une seconde pièce de guidage 77 qui est placée contre la première pièce de guidage le long d'une seconde surface d'appui 78 ayant comme la première surface d'appui une première portion plane 79 parallèle à la face avant 13 du couvercle, une seconde portion courbe 80 et une troisième portion plane 81 sensiblement perpendiculaire à la première portion.

Entre cette première surface d'appui 78 et la seconde surface d'appui 82 de même contour appartenant à la seconde pièce, existe un couloir 83 qui suit le même trajet et présente une entrée 84 à l'extrémité de la troisième portion 81. L'entrée 84 pourrait éventuellement être placée à l'extrémité de la portion courbe si celle-ci se trouvait sensiblement en regard du prolongement 61.

Ces deux pièces de guidage sont rendues solidaires du couvercle par des moyens simples qui ne sont pas illustrés sur la figure, tels que par exemple une colle ou des moyens d'accrochage élastiques.

Un ruban flexible 85 est disposé dans le couloir 83 de façon telle que son extrémité 86 qui sort de l'entrée 84, soit associée au prolongement 61 de la rondelle 60 placée en regard, par exemple grâce à une ouverture 87 ; la seconde extrémité 88 du ruban qui est placée dans la première portion 79 porte un index 89 coopérant avec les graduations 90 d'une échelle 23, voir figure 7 ; celle-ci peut être soit gravée sur la portion transparente, soit de préférence, portée par une étiquette auto-collante 91 qui prend par exemple la forme d'un cadre rectangulaire dont la périphérie 92 recouvre les bords de la fenêtre et ceux de la portion transparente 76, en assurant ainsi l'étanchéité, voir figures 7 et 4.

Un second levier 93 s'étendant sensiblement parallèlement à l'axe YY' et pivotant autour d'une goupille 94 d'axe RR' perpendiculaire au plan médian P, possède un premier point d'appui 95 appliqué sur un épaulement 96 de l'organe de commande et un second point d'appui 97 opposé au premier.

Ce second point d'appui mobile selon une direction ZZ' du plan PP' sensiblement parallèle à l'axe XX' est placé en regard d'un poussoir 18 appartenant à un interrupteur 19 ayant des bornes de raccordement dirigées de préférence vers le couvercle et aptes à recevoir des extrémités de conducteurs 26.

Ces conducteurs, éventuellement protégés par une gaine, traversent une ouverture de passage 27 du corps et d'axe SS', pouvant être équipée d'un presse-étoupe non représenté.

L'orifice de raccordement pneumatique 25 est placé comme le dispositif sensible à la pression, au voisinage de la face de fixation 5, tandis que l'ouverture de passage 27 est placée, comme l'interrupteur, au voisinage du couvercle 30, cet orifice et cette ouverture débouchant sur la face inférieure 24.

Cette disposition qui facilite l'accès aux bornes de l'interrupteur, nécessite néanmoins que le couvercle soit séparé du corps pour effectuer le raccordement électrique ; au cours de cette séparation, voir figure 8, qui s'opère parallèlement à l'axe YY', la goupille 64 de l'organe de réglage 15 se dégage de l'entaille 66 de l'écrou 56 après avoir effectué une course d'une certaine longueur P, et le ruban souple 85 qui reste accroché à la rondelle 60, 61, s'échappe du couloir 83, lorsque le couvercle a effectué une course q parallèle et supérieure à p.

Le choix de ces valeurs p et q permet, au moment de la remise en place du couvercle (position en pointillés), d'engager d'abord l'extrémité 88 du ruban 85 dans l'entrée 84 avant d'engager la goupille 64 dans l'entaille 66, ce dernier engagement étant plus commode à effectuer que le précédent.

Le mode de réalisation préféré de l'invention qui vient d'être décrit peut subir des aménagements qui ne modifient pas la disposition générale des principaux éléments.

C'est ainsi que l'accouplement amovible établi entre l'écrou et l'organe de réglage pourrait être obtenu par des moyens équivalents, ou par une inversion évidente de la position de la goupille, qui pourrait venir sur l'écrou, et de l'entaille qui pourrait être pratiquée sur l'organe de commande.

On pourrait également n'utiliser qu'un seul levier effectuant simultanément les fonctions du premier et du second leviers. Cette dernière variante ne donnerait toutefois pas à l'appareil l'indépendance avantageuse entre la fonction d'équilibrage de pression et la fonction de commande de l'interrupteur électrique qui est fournie par le mode de réalisation préféré de la figure 4.

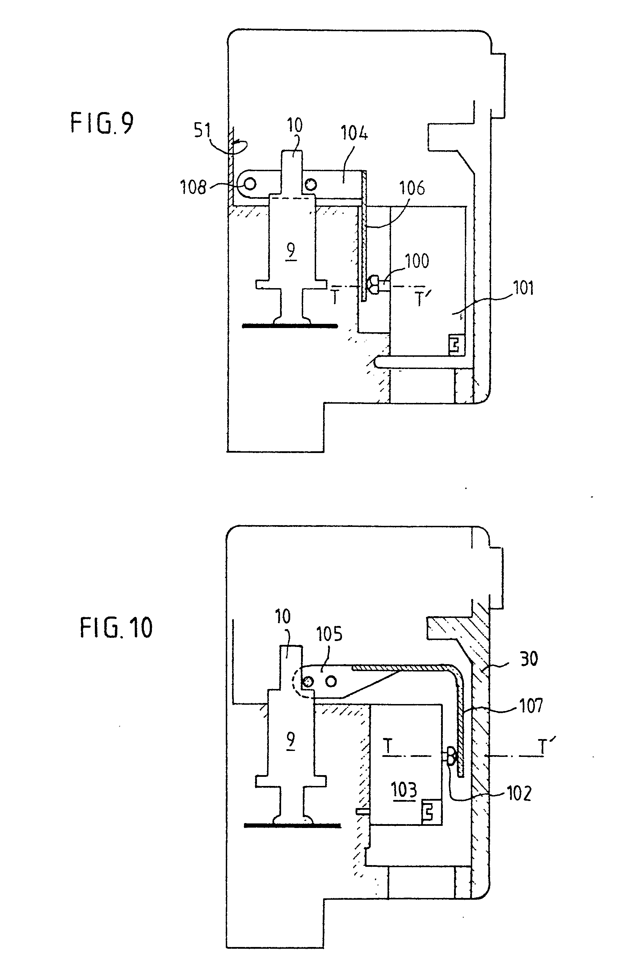

Ce dernier permet notamment de donner aux leviers des rapports de transmission différents pour satisfaire leur fonction propre et permet surtout d'éviter que l'usure apparaissant sur la goupille 48, qui est fortement chargée par le ressort, modifie le point d'enclenchement et de déclenchement de l'interrupteur. Enfin, la position de l'interrupteur dans le boîtier restant inchangée, on peut faire appel à des interrupteurs dont le poussoir est orienté différemment. C'est ainsi que dans la variante visible à la figure 9, le poussoir 100 de l'interrupteur mobile selon TT' dans le plan P est placé entre le dispositif sensible à la pression 9 et l'interrupteur 101 et que dans la variante visible à la figure 10 le poussoir 102 de l'interrupteur mobile, également selon TT', est placé entre l'interrupteur 103 et le couvercle 30. Dans ces deux cas, les leviers de transmission 104 respectivement 105 doivent comporter une branche coudée 106 respectivement 107 pour communiquer au poussoir les mouvements de l'organe de commande ; afin d'obtenir à la figure 9 un mouvement de la branche 106 du levier 104, susceptible de provoquer l'enfoncement du poussoir 100, on peut être amené par exemple à placer un pivot 108 de ce levier 104 entre le fond 51 du corps et l'organe de commande 10.

Les dispositions respectives des pièces constituant ce manostat ainsi que leur mode de réalisation permettent d'obtenir intégralement et à moindre frais les résultats visés.

Dans une variante de réalisation non représentée, on pourrait prolonger vers l'extérieur l'écrou de réglage par une tige cylindrique traversant une ouverture du couvercle ; ce mode de réalisation priverait toutefois l'appareil du bénéfice fourni par une face avant sensiblement plane, car cette tige dépasserait, selon la pression de consigne choisie, d'une quantité plus ou moins importante. Une telle variante entre toutefois dans le cadre de l'invention, ainsi d'ailleurs que celle où le ruban flexible porterait une échelle mobile et où l'index fixe serait placé sur le couvercle ou sur la fenêtre.

**Revendications**

1. Dispositif indicateur de pression pour manostat (1) comportant, dans un boîtier (2) ayant une face arrière (5) et, à l'opposé de celle-ci, une face (13) avant constituée par un couvercle amovible (30), un dispositif (9) sensible à une pression de fluide dans lequel celle-ci provoque le déplacement d'un organe mobile de commande (10), un ressort de compression (14) ayant une première extrémité (14) qui communique un effort à cet organe pour équilibrer la pression et une seconde extrémité (14') coopérant avec un dispositif de réglage (15, 15') apte à modifier la compression de ce ressort, un interrupteur électrique (19) ayant un poussoir (18), et des bornes de raccordement internes pour recevoir des extrémités de conducteurs électriques (28), un levier de transmission (17) qui communique les déplacements de l'organe mobile à ce poussoir (18), un organe indicateur qui est lié aux déplacements de la seconde extrémité du ressort ou au dispositif de réglage (15, 15') et comporte un index (22) se déplaçant en regard d'une échelle de pression (23), ce boîtier présentant, sur sa surface, un orifice de pression (25) relié intérieurement au dispositif sensible et extérieurement à une source de pression de fluide à surveiller et une ouverture de raccordement (27) à travers laquelle passent les conducteurs électriques (28), caractérisé en ce que ledit ressort (14) associé au dispositif sensible à la pression (9) est axé perpendiculairement à la face avant du couvercle amovible (30), en ce que l'organe indicateur (22) comporte un ruban flexible (85) accouplé à une pièce mobile (56, 60) qui suit les mouvements de la seconde extrémité dudit ressort (14), et en ce que le couvercle amovible (30) comprend un couloir (83) présentant une première portion (81) qui s'étend à l'intérieur du boîtier parallèlement à l'axe de déplacement (YY') de ladite pièce mobile (56, 60), une deuxième portion (80) de forme courbe et une troisième portion (79) transparente parallèle à ladite face avant du couvercle amovible (30).

2. Dispositif selon la revendication 1, caractérisé en ce que le susdit dispositif de réglage est accessible de l'extérieur grâce à une ouverture (71) prévue dans la face avant du couvercle (30) dans l'axe de déplacement de la susdite pièce mobile (56, 60).

3. Dispositif selon la revendication 1, caractérisé en ce que le couloir (83) est compris entre deux pièces (75, 77) disposées à l'intérieur du couvercle (30).

4. Dispositif selon la revendication 3, caractérisé en ce que l'une des pièces (75) limitant le couloir (83) présente une partie transparente (76) engagée dans une fenêtre verticale (73) du couvercle (30).

5. Dispositif selon l'une des revendications 1 à 4, caractérisé en ce que la pièce à laquelle est liée l'extrémité (86) du ruban est une rondelle (60) guidée par une nervure (62) parallèle à l'axe YY' d'une tige fixe filetée (54), et portée par un écrou (56) mobile sur cette tige filetée.

6. Dispositif selon la revendication 5, caractérisé en ce que cet écrou (56) comporte des surfaces (63), parallèles à l'axe YY' et coopérant angulairement avec des surfaces d'une pièce rotative (64) solidaire d'un bouton de réglage (68) qui est porté par le couvercle (30).

7. Dispositif selon la revendication 6, caractérisé en ce que ces surfaces (63) sont celles d'une rainure ouverte (66) ayant une longueur p telle que la pièce rotative (64) soit dégagée de la rainure, lors d'un démontage du couvercle (30), avant que le ruban flexible (85) ait quitté son couloir (83).

8. Dispositif selon la revendication 7, caractérisé en ce que l'extrémité externe (86) du ruban (85) est accouplée de façon amovible avec une patte ou crochet (61) de la rondelle (60).

## Claims

1. Set pressure indicator for a pressure switch (1) having, in a case (2) with a rear face (5) and opposite this latter, a front face (13) formed by a movable lid (30), a device (9) sensitive to a fluid pressure in which this pressure causes the displacement of a movable control part (10), a pressure spring (14) having a first end (14') which communicates a force to said part for equilibrating the pressure and a second end (14") cooperating with a set device (15, 15') adapted to modify the compression of said spring, an electric switch (19) having a pusher (18) and internal connection terminals for receiving the ends of electric conductors (28), a transmission lever (17) which communicates the displacements of the movable part to said pusher (18), a display part which is connected to the displacements of the second end of the spring or to the set device (15, 15') and has a pointer (22) moving opposite a pressure scale (23), this case having on its surface, a pressure orifice (25) internally connected to the pressure sensitive device (9) and externally to a fluid pressure source to be monitored and an opening for connection (27) through which pass the electric conductors (28), characterized in that said spring (14) associated with the pressure sensitive device (9) has its axis orthogonal to the front face of the movable lid (30) in that the display part (22) has a flexible strip (85) coupled to a movable piece (56, 60) which follows the movements of the second end of said spring (14), and in that the movable lid (30) comprises a passage (83) having a first portion (81) extending towards the interior of the case parallel to the axis of displacement (Y, Y') of said movable piece (56, 60), a second bent portion (80) and a third, transparent portion (79) parallel to said front face of the movable lid (30).

2. Device according to claim 1, characterized in that said set device can be reached from the exterior by an opening (71) provided in the front face of the cover (30) following the axis of displacement of said movable piece (56, 60).

3. Device according to claim 1, characterized in that the passage (83) is lodged between two pieces (75, 77) disposed in cover (30).

4. Device according to claim 3, characterized in that one of the pieces (75) which limits the passage (83) has a transparent part (76) inserted in a vertical window (73) of cover (30).

5. Device according to one of claims 1 to 4, characterized in that the piece to which the end (86) of the strip is connected is a washer (60) guided by a rib (62) parallel to the axis (Y, Y') of a fixed threaded rod (54) and maintained by a nut (56) which is movable on said threaded rod.

6. Device according to claim 5, characterized in that said nut (56) has surfaces (63) parallel to axis (Y, Y') and angularly cooperating with surfaces of a rotating piece (64) integral with a set button (68) supported by lid (30).

7. Device according to claim 6, characterized in that said surfaces (63) are those of an open groove (66) having a length p such that, when lid (30) is dismounted the rotating piece (64) is freed from the groove, before the flexible strip (85) has left its passage (83).

8. Device according to claim 7, characterized in that the outer end (86) of strip (85) is movably coupled to a latch or hook (61) of washer (60).

## Patentansprüche

1. Bezugsdruckanzeiger für einen Druckschalter (1), der in einem Gehäuse (2) mit einer hinteren Fläche (5) und, gegenüber dieser Fläche, einer vorderen Fläche (13), die von einem abnehmbaren Deckel (30) gebildet wird, eine Vorrichtung (9) hat, die auf einen Flüssigkeitsdruck anspricht, der in ihr ein bewegliches Steuerorgan (10) verschiebt, eine Druckfeder (14) mit einem ersten Ende (14'), das besagtem Organ Kraft verleiht, um den Druck auszugleichen, und einem zweiten Ende (14"), das mit einer Stellvorrichtung (15, 15') zusammenarbeitet, die den Druck besagter Feder verändern kann, einen elektrischen Schalter (19) mit einem Drücker (18) und interne Anschlussklemmen zur Aufnahme der Enden von elektrischen Leitern (28), einen Übertragungshebel (17), welcher die Bewegungen des beweglichen Organs an den Drücker (18) weiterleitet, ein Anzeigeorgan, das von den Bewegungen des zweiten Federendes oder dem Stellorgan (15, 15') beeinflusst wird mit einem Zeiger (22), welcher sich gegenüber einer Druckskala (23) bewegt, wobei besagtes Gehäuse auf seiner Oberfläche eine Drucköffnung (25) besitzt, die nach innen mit der druckempfindlichen Vorrichtung (9) und nach aussen mit einer Flüssigkeitsdruckquelle, die überwacht werden soll, in Verbindung steht und eine Anschlussöffnung (27), durch die die elektrischen Leiter (28) hindurchgehen, dadurch gekennzeichnet, dass die Achse besagter mit der druckempfindlichen Vorrichtung (9) assoziierter Feder (14) senkrecht zur vorderen Fläche des abnehmbaren Deckels (30) verläuft, dass das Anzeigeorgan (22) ein mit einem beweglichen Teil (56, 60) gekuppeltes Band (85) besitzt, das den Bewegungen des zweiten Endes der besagten Feder (14) folgt und dass der abnehmbare Deckel (30) einen Durchlass (83) besitzt, mit einem ersten Abschnitt (81), der im Inneren des Gehäuses parallel zur Bewegungsachse (YY') besagten beweglichen Teiles (56, 60) verläuft, einem zweiten, gebogenen Abschnitt (80) und einem dritten durchsichtigen Abschnitt (79), der parallel zu besagter vorderer Fläche des abnehmbaren Deckels (30) angeordnet ist.

2. Vorrichtung nach Anspruch 1, dadurch gekennzeichnet, dass besagte Stellvorrichtung von aussen durch eine Öffnung (71) erreicht werden kann, welche sich in der vorderen Fläche des Deckels (30) entlang der Bewegungsachse besagten beweglichen Teils (56, 60) befindet.

3. Vorrichtung nach Anspruch 1, dadurch gekennzeichnet, dass der Durchlass (83) sich zwischen zwei, im Inneren des Deckels (30) angeordneten, Teilen (75, 77) befindet.

4. Vorrichtung nach Anspruch 3, dadurch gekennzeichnet, dass eines der Teile (75), welches den Durchlass (83) begrenzt, einen durchsichtigen Abschnitt (76) hat, der sich in ein senkrechtes Fenster (73) des Deckels (30) einfügt.

5. Vorrichtung nach einem der Ansprüche 1 bis 4, dadurch gekennzeichnet, dass das Teil mit dem das Bandende (86) verbunden ist, eine Scheibe (60) ist, die von einer Rippe (62) parallel zur Achse YY' einer feststehenden Gewindestande (54) geführt und von einer auf dieser Gewindestange beweglichen Mutter (56) getragen wird.

6. Vorrichtung nach Anspruch 5, dadurch gekennzeichnet, dass diese Mutter (56) Flächen (63) besitzt, die parallel zur Achse YY' angeordnet sind und im Winkel mit den Flächen eines drehbaren Teiles (64) zusammenarbeiten, das mit einem, vom Deckel (30) getragenen, Stellknopf (68) fest verbunden ist.

7. Vorrichtung nach Anspruch 6, dadurch gekennzeichnet, dass besagte Flächen (63) die Flächenen einer offenen Rinne (66) sind, deren Länge p so bestimmt wurde, dass sich das drehbare Teil (64), beim Abnehmen des Deckels (30), ausserhalb der Rinne befindet, bevor das biegsame Band (85) seinen Durchlass (83) verlassen hat.

8. Vorrichtung nach Anspruch 7, dadurch gekennzeichnet, dass das äussere Ende (86) des Bandes (85) beweglich mit einer Lasche oder einem Haken (61) der Scheibe (60) gekuppelt ist.

FIG. 1

FIG. 2

FIG. 3

# FIG. 4

# FIG. 5

# FIG. 6

FIG. 7

FIG. 8

FIG.9

FIG.10